# EUROPEAN PATENT APPLICATION

(11) **EP 2 423 354 A1**
(43) Date of publication of application: **29.02.2012**
(21) Application number: 10785995.1
(22) Date of filing: 29.03.2010
(51) Int. Cl.: C25B 1/24, C01B 7/20, C25B 9/00, C25B 15/08

(54) **FLUORINE GAS GENERATING DEVICE**

(30) Priority: 12.06.2009 JP 2009140974; 09.03.2010 JP 2010051315
(71) Applicant: Central Glass Company, Limited, Yamaguchi 755-0001 (JP)
(72) Inventor: MORI, Isamu, Yamaguchi 755-0001 (JP); MIYAZAKI, Tatsuo, Yamaguchi 755-0001 (JP); YAO, Akifumi, Yamaguchi 755-0001 (JP); KITA, Takuya, Yamaguchi 755-0001 (JP)
(74) Representative: Manitz, Finsterwald & Partner GbR
(86) International application number: PCT/JP2010/055513
(87) International publication number: WO 2010/143464

(57) **Abstract**

A fluorine gas generating device 100 is provided which facilitates the maintenance operation of recovery and replacement of an adsorbing material that adsorbs hydrogen fluoride and supplies fluorine gas in a stable manner. The device comprises a refining line 20 that includes refining devices that, with the aid of adsorbing material, remove hydrogen fluoride gas that has been evaporated from a molten salt of an electrolytic tank 1 and mixed to fluorine gas generated at a positive pole 103a of the electrolytic tank. The refining line 20 comprises a first refining section 21 that includes at least two refining devices arranged in parallel and a second refining section 22 that includes at least two refining devices arranged in parallel and is positioned downstream of the first refining section 21. Fluorine gas that has passed through either one of the refining devices of the first refining section 21 is selectively led to either one of the refining devices of the second refining section.

## Description

### Technical Field:

The present invention relates to fluorine gas generating devices of a type that greatly facilitates the maintenance operation of recovery and replacement of adsorbing material that adsorbs hydrogen fluoride.

### Background Art:

Hitherto, a fluorine gas generating device has been known which comprises an electrolytic tank that electrolyzes hydrogen fluoride in a bath of electrolytic solution that includes a molten salt containing therein hydrogen fluoride and which generates at an anode side a main-product gas that contains as a main component fluorine gas and at a cathode side a by-product gas that contains as a main component hydrogen gas.

In fluorine gas generating devices of such type, it tends to occur that hydrogen fluoride gas evaporated from the molten salt is mixed into fluorine gas that has been generated at the anode side. Accordingly, it is necessary to separate and remove hydrogen fluoride from fluorine gas generated at the anode side to refine the fluorine gas.

In Patent Document 1, there is disclosed a technique in which for removing hydrogen fluoride from fluorine gas generated at the anode side, there is used a hydrogen fluoride adsorbing column filled with a filler such as sodium fluoride (NaF) and in which for replacement of the filler, two or more hydrogen fluoride adsorbing means are arranged in parallel and one of the hydrogen fluoride adsorbing means is switched to operate by a switch valve, so that maintenance of the filler and filler replacement work are facilitated.

### PRIOR ART DOCUMENT

### PATENT DOCUMENT

Patent Document 1: Japanese Laid-open Patent Application (Tokkai) 2004-107761

### Summary of Invention:

### Problems to be solved by Invention:

In case of using sodium fluoride (NaF) as adsorbing material for adsorbing hydrogen fluoride, increased collecting efficiency for hydrogen fluoride is expected in a range of room temperature. However, in such case, because of increased adsorption of hydrogen fluoride, the adsorbing material is liable to be hardened thereby shortening the life of the adsorbing material. While in a range of temperature of about 100°C, the adsorbing efficiency to hydrogen fluoride is lowered although the life of the adsorbing material is elongated as compared with the case of the room temperature.

When, in the fluorine gas generating device described in Patent Document 1 and with NaF being used as adsorbing material, the temperature of the hydrogen fluoride adsorbing column is set at the room temperature, the hydrogen fluoride adsorbing efficiency is increased, but the life of the adsorbing material is shortened thereby increasing the number of replacement of the adsorbing material. While, when the temperature of the hydrogen fluoride adsorbing column is increased, the life of the adsorbing material is elongated, but the hydrogen fluoride adsorbing efficiency is lowered, which is an undesired matter.

As is described hereinabove, in the method wherein two or more hydrogen fluoride adsorbing means are arranged in parallel, it is difficult to carry out the adsorption and recovering of hydrogen fluoride at a high efficiency and thus it is difficult to suppress deterioration of the adsorbing material.

The present invention is provided by taking the above-mentioned problem into consideration and aims to provide a fluorine gas generating device that can facilitate the maintenance operation of recovery and replacement of adsorbing material and supply fluorine gas in a stable manner.

### Means for solving the Problems:

As a result of seriously studying and considering the way for solving the above-mentioned problem, the inventors have found out a fact, viz., the concept of the present invention, in which when, with at least two refining devices being arranged in series each refining device containing therein adsorbing material for adsorbing hydrogen fluoride, the adsorbing degree of each refining device to hydrogen fluoride is suitably controlled, undesired deterioration of the filler (viz., adsorbing material), which would be caused by adsorption of hydrogen fluoride, becomes lowered and thus recovering of hydrogen fluoride is effectively carried out.

Furthermore, the inventors have found that generation of fluorine gas can be effectively carried out by recovering hydrogen fluoride that has been adsorbed in each refining device and feeding the recovered hydrogen fluoride to a material source of an electrolytic tank to reuse the hydrogen fluoride.

That is, according to the present invention, there is provided a fluorine gas generating device for generating fluorine gas by subjecting hydrogen fluoride in a molten salt with hydrogen fluoride to electrolysis, which comprises an electrolytic tank that, by subjecting hydrogen fluoride in a bath of electrolytic solution including a molten salt containing hydrogen fluoride, generates at an anode side a main-product gas that contains as a main component fluorine gas and at a cathode side a by-product gas that contains as a main component hydrogen gas; and a refining line including refining devices that, with the aid of an adsorbing material, remove hydrogen fluoride gas that has been evaporated from the molten salt of the electrolytic tank and mixed to the fluorine gas generated at the anode side, the refining line comprising a first refining section including at least two refining devices that are arranged in parallel; a second refining section including at least two refining devices that are arranged in parallel, the second refining section being positioned downstream of the first refining section; and a piping through which fluorine gas that has passed through either one of the refining devices of the first refining section is led to either one of the refining devices of the second refining section.

Furthermore, in the present invention, there is provided a fluorine gas generating device as defined hereinabove, in which each of the refining devices comprises adsorbing material storing means that contains therein an adsorbing material that is able to adsorb the hydrogen fluoride in the fluorine gas generated in the electrolytic tank, the adsorbing ability of the adsorbing material varies with change of temperature; a temperature control device that controls the temperature in the adsorbing material storing means; a concentration detector that detects the concentration of hydrogen fluoride in the fluorine gas that is passing through the adsorbing material storing means; and a piping through which based on results of detection by the concentration detector, operation switching is so made that the fluorine gas is led to the refining device in a standby condition in the first or second refining section, the hydrogen fluoride is discharged from the adsorbing material storing means of the refining device that has stopped in operation due to the operating switching, and the temperature in the refining device is controlled by the temperature control device thereby to cause the stopped refining device to take a standby condition.

The above-mentioned adsorbing material containing means is a device that is able to hold an adsorbing material in a space, for example, a hollow member such as a cylindrical hollow member. The cylindrical hollow member may be a vessel that is constructed to contain therein adsorbing material for adsorbing hydrogen fluoride and arranged to force fluorine gas, which has been generated from an electrolytic tank, to flow therein and therethrough thereby to adsorb hydrogen fluoride in the fluorine gas. The shape of the cylindrical hollow member is not limited.

In the fluorine gas generating device of the invention, there is a further characterization in which in the first and second refining sections, the temperature in the refining devices to which the fluorine gas is led is controlled to a range from 0°C to 120°C, and the temperature in the refining devices of the first refining section is higher than that in the refining devices of the second refining section.

It is preferable that the temperature in the adsorbing material containing means of the first refining section to which the fluorine gas is led is 70°C to 100°C, and the temperature in the adsorbing material containing means of the second refining section to which the fluorine gas is led is 0°C to 50°C.

In the present invention, it is preferable to provide an adsorbing material holding member that is arranged to define a space for securing a gas flow passage in the adsorbing material containing means.

In the invention, it is preferable to provide the adsorbing material holding member with a through bore.

In the invention, it is preferable that the adsorbing material holding member is in the shape of tray.

Furthermore, in the invention, it is preferable that the adsorbing material holding member is so arranged as to form a zigzag gas flow in the adsorbing material containing means.

Furthermore, in the invention, it is preferable that in the refining devices of the first and second refining sections, a discharging passage is provided to discharge the adsorbed hydrogen fluoride therefrom and recover the hydrogen fluoride adsorbed by the refining devices for the purpose of reusing the hydrogen fluoride in the electrolytic tank.

Furthermore, in the invention, it is preferable that the adsorbing material is sodium fluoride.

### Advantageous Effects of the Invention:

In accordance with the present invention, the maintenance operation of recovery and replacement of adsorbing material for adsorbing hydrogen fluoride is facilitated, and by supplying adsorbed hydrogen fluoride to a material source of an electrolytic tank for reuse of the hydrogen fluoride, it is possible to provide a fluorine gas generating device that is able to effectively and stably supply fluorine gas to a given portion.

### Brief Description of the Drawings:

Fig. 1 is a schematic view of a fluorine gas generating device which is an embodiment of the present invention.
Fig. 2 is a detailed view of a refining line employed in the embodiment of the present invention.
Fig. 3 is a schematic view of a refining device employed in a second embodiment of the present invention.
Fig. 4 is a sectional view taken along the line A-A of Fig. 3.
Fig. 5 is a view of a tray-like member employed in the second embodiment of the present invention.
Fig. 6 is a preferred refining line employed in the second embodiment of the present invention.
Fig. 7 is a schematic view of an experimental arrangement by which a refining device for the second embodiment of the invention was subjected to a refining ability test.

### Best mode Embodiment of the Invention:

In the following, embodiments of the present invention will be described with reference to the accompanying drawings.

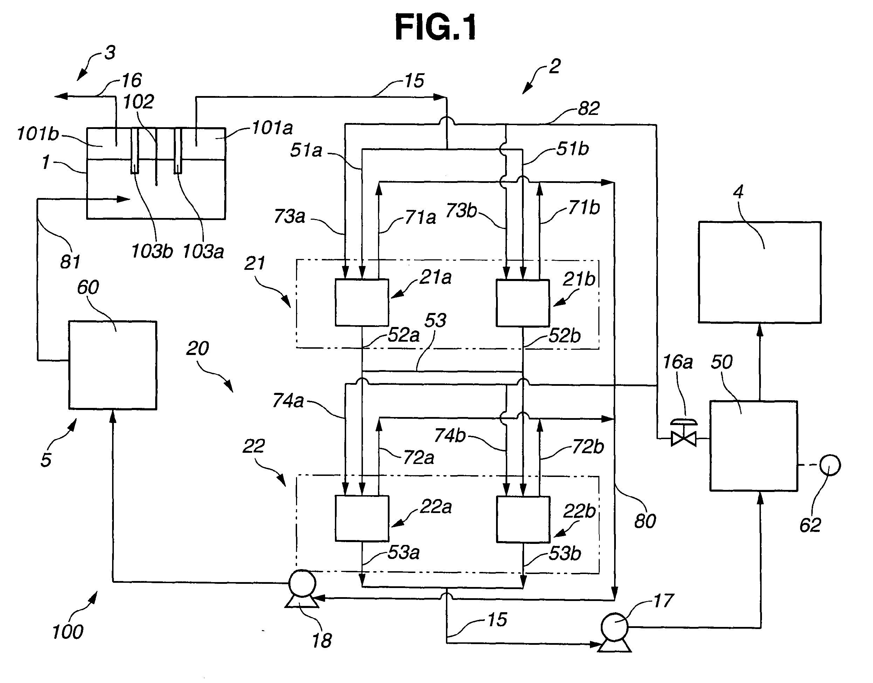

With the aid of Fig. 1, a fluorine gas generating device 100 of an embodiment of the invention will be described.

The fluorine gas generating device 100 is a device that generates fluorine gas by carrying out electrolysis and supplies the generated fluorine gas to an external device 4. One example of the external device 4 is a semiconductor production device. In this case, in the process of producing the semiconductor, the fluorine gas is used as a cleaning gas.

The fluorine gas generating device 100 comprises an electrolytic tank 1 that generates fluorine gas by carrying out electrolysis, a fluorine gas supplying system 2 that supplies the fluorine gas generated in the electrolytic tank 1 to the external device 4 and a by-product gas processing system 3 that processes a by-product gas simultaneously produced when the fluorine gas is generated.

First, the electrolytic tank 1 will be described.

Within the electrolytic tank 1, there is contained a molten salt that contains hydrogen fluoride (HF). In this embodiment, as the molten salt, a mixture of hydrogen fluoride and potassium fluoride is used.

The interior of the electrolytic tank 1 is divided into an anode chamber 101a and a cathode chamber 101b by a partition wall 102 that is immersed in the molten salt. The anode chamber 101a and cathode chamber 101b have respectively positive and negative poles 103a and 103b immersed in the molten salt. By applying from an electric power source (not shown) a direct-current voltage between the positive and negative poles 103a and 103b, there are generated fluorine gas (F) at the positive pole 103a and hydrogen gas (H₂) at the negative pole 103b as a by-product gas. As the positive pole 103a, a carbon electrode is used, and as the negative pole 103, an electrode made of soft-iron, Monel metal or nickel is used.

Since the melting point of KF·2HF is 71.7°C, the temperature of the molten salt is controlled to a range from 90°C to 100°C. Into the fluorine gas and hydrogen gas generated respectively at the positive pole 103a and negative pole 103b of the electrolytic tank 1, there is mixed or led hydrogen fluoride evaporated from the molten salt by an amount of its vapor pressure. For the reason mentioned hereinabove, both the fluorine gas generated at the positive pole 103a and led into the anode chamber 101a and the hydrogen gas generated at the negative pole 103b and led into the cathode chamber 101b contain therein hydrogen fluoride gas.

The anode chamber 101a and cathode chamber 101b of the electrolytic tank 1 are respectively provided with pressure gauges (not shown).

In the following, the fluorine gas supplying system 2 will be described.

To the anode chamber 101a, there is connected a first main passage 15 for supplying the fluorine gas to the external device, and to the first main passage 15, there is connected a first pump 17 for sucking the fluorine gas from the anode chamber 101a and conveying the same.

To the first main passage 15 at a position upstream of the first pump 17, there is provided a refining line 20 that operates to refine the fluorine gas by removing hydrogen fluoride gas mixed in the fluorine gas. The refining line 20 is a system for separating and removing hydrogen fluoride from the fluorine gas by using an adsorption of hydrogen fluoride by sodium fluoride.

The refining line 20 generally comprises a first refining section 21 that roughly removes hydrogen fluoride from the fluorine gas generated at the positive pole 103, and a second refining section 22 that removes the hydrogen fluoride that has not been removed by the first refining section 21, and the second refining section 22 is arranged at a position downstream of the first refining section 21.

At a downstream part of the first pump 17 on the first main passage 15, there is provided a first buffer tank 50 that stores the fluorine gas conveyed by the first pump 17. The fluorine gas stored by the first buffer tank 50 is led to the external device 4. To the first buffer tank 50, there is connected a hydrogen fluoride concentration detector 62 that optically analyzes or detects the concentration of hydrogen fluoride in the fluorine gas. The types of the detector are not limited so long as it is able to detect the concentration of hydrogen fluoride. For example, Fourier transform infrared spectrometer (FT-IR) is usable.

In the following, the by-product gas processing system 3 will be described.

To the cathode chamber 101b, there is connected a second main passage 16 for discharging hydrogen gas to the outside. To the passage 16 for discharging hydrogen gas, there are connected, as the need arises, a pump, a pressure adjusting and flow adjusting valve, a pressure meter and a refining device, so that the hydrogen gas is discharged to the outside after being rendered harmless.

The fluorine gas generating device 100 is further equipped with a material supply system 5 that feeds the molten salt of the electrolytic tank 1 with hydrogen fluoride that is a material of the fluorine gas.

In the following, the material supply system 5 will be described.

To the electrolytic tank 1, there is connected a material supply passage 81 that leads hydrogen fluoride fed from a hydrogen fluoride supply source 60 to the molten salt of in electrolytic tank 1. Although not shown, to the material supply passage 81, there are connected a flow control valve by which the amount of supply of hydrogen fluoride is controlled, a carrier gas supply source, a supply passage through which the carrier gas is led to the material supply passage, a switch valve by which supply of carrier gas and blocking of same are switched, etc., so that a supply amount of hydrogen fluoride is so controlled as to supplement the hydrogen fluoride that has been subjected to electrolysis in the molten salt.

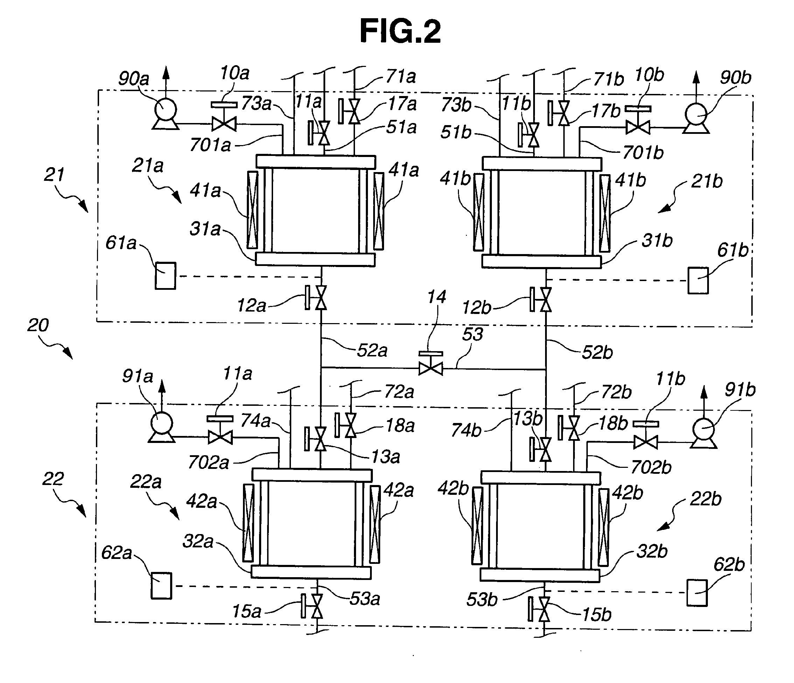

In the following, the refining line 20 will be described with reference to Figs. 1 and 2.

The refining line 20 for removing hydraulic fluoride gas from fluorine gas generated at the positive pole 103a comprises the first refining section 21 and the second refining section 22 that is arranged at a position downstream of the first refining section 21. In the following, the first refining section 21 and the second refining section 22 will be described in order.

Since refining devices respectively used in the first refining section 21 and second refining section 22 have the same construction, the following description will be mainly directed to a refining device 21a of the first refining section 21, and description on a similar construction of the other refining device will be omitted while having parts identical to those of the refining device 21a denoted by the same references. The refining devices of the respective first and second refining sections 21 and 22 are distinguished by the addition of "a" and "b".

First, the first refining section 21 will be described.

The first refining section 21 comprises two systems arranged in parallel, which are a refining device 21a and another refining device 21b and are switchable to cause only one of them to open for flowing of fluorine gas therethrough. That is, when one of the refining device 21a and refining device 21b is in operative condition, the other one of the devices is in a standstill or standby condition.

The refining device 21a is provided with a system that treats the fluorine gas generated at the positive pole 103a, a system that discharges or recovers hydrogen fluoride adsorbed in the refining device 21a, a system that discharges fluorine in the refining device 21a, a system that controls the pressure in the refining device 21a in a standby condition, and a detecting system that detects concentration of hydrogen fluoride in the fluorine gas that has passed through a cylindrical member 31a (adsorbing material containing means) of the refining device 21a.

The refining device 21 is equipped with the cylindrical member 31a through which fluorine gas passes, and the cylindrical member 31a contains therein adsorbing material that adsorbs hydrogen fluoride.

The above-mentioned cylindrical member 31a is a vessel that contains therein an adsorbing material for adsorbing hydrogen fluoride, permits therethrough flowing of fluorine gas generated in the electrolytic tank 1 and causes hydrogen fluoride gas in the fluorine gas to be adsorbed or trapped. The shape of the cylindrical member is not limited. Preferably, the cylindrical member is made of a material that exhibits a durability against fluorine gas and hydrogen fluoride gas. For example, stainless steel, Monel metal, alloys of nickel and nickel metal are preferable.

As the adsorbing material, porous beads made of sodium fluoride (NaF) are used. Since the adsorbing ability of sodium fluoride varies with change of temperature, the cylindrical member 31a is provided therearound with a heater 41a as a temperature control device that adjusts the temperature in the interior of the cylindrical member 31a.

The types of the temperature control device are not limited so long as it is able to control the temperature in the interior of the cylindrical member. For example, heater, steam-used heater, or a heating/cooling device using catalyst or refrigerant may be used.

Examples of the adsorbing material are fluorides of alkaline metal, which are NaF, KF, RbF and CsF. Among them, NaF is particularly preferable.

To the refining device 21a, there is connected an inlet passage 51a for leading to the refining device the fluorine gas generated at the positive pole 103a. The inlet passage 51a is one of two branches provided by the first main passage 15, and the other inlet passage 51b is connected to the other refining device 21b. To the inlet passage 51a, there is mounted an inlet valve 11a that selectively blocks and allows the flow of fluorine gas into the refining device 21a.

To a downstream part of the refining device 21a, there is connected an outlet passage 52a for discharging fluorine gas from the refining device 21a. The outlet passage 52a is provided with an outlet valve 12a that selectively blocks and permits the flow of fluorine gas from the refining device 21a.

To the outlet passage 52a, there is connected a detector 61a that optically analyzes or detects the concentration of hydrogen fluoride in the fluorine gas that has passed through the cylindrical member 31a. The types of the detector are not limited so long as it is able to analyze or detect the concentration of hydrogen fluoride. For example, Fourier transform infrared spectrometer (FT-IR) is usable.

When the refining device 21a is in operative condition, both the inlet valve 11a and outlet valve 12a are opened, while, when the refining device 21a is in a standstill or standby condition, both the inlet valve 11a and outlet valve 12a are closed.

To the refining device 21a, there is connected an outlet passage 71a for discharging hydrogen fluoride adsorbed in the cylindrical member 31a, and the outlet passage 71a is connected to a passage 80 from which the hydrogen fluoride is discharged.

To a downstream part of the discharge passage 80, there is connected a second pump 18 that functions to suck the hydrogen fluoride adsorbed by the refining device, and the second pump is connected to the hydrogen fluoride supply source 60. By supplying the recovered hydrogen fluoride to the hydrogen fluoride supply source 60, supplement of material is achieved. If desired, the discharge passage 80 may be equipped with a buffer tank for storing the hydrogen fluoride, and the stored hydrogen fluoride in the buffer bank may be supplied to the hydrogen fluoride supply source 60 as the need arises.

As is mentioned hereinabove, the recovered hydrogen fluoride is fed to the electrolytic tank 1 after being temporarily stored in the buffer tank and/or hydrogen fluoride supply source 60. However, if desired, supplement of the material may be so made that the recovered hydrogen fluoride is directly fed to the electrolytic tank 1 without being temporarily stored in the buffer tank and/or the hydrogen fluoride supply source 60.

To the refining device 21a, there is connected a passage 701a for discharging fluorine gas for regeneration of the refining device 21a, and to the passage 701a, there is connected a discharge valve 10a for discharging the fluorine gas. Furthermore, to the passage 701a, there is mounted a discharge pump 90a.

To the refining device 21a, there is connected a passage 73a through which for regenerating the refining device 21a and putting the device into a standby condition, the pressure in the cylindrical member 31a of the refining device 21a is controlled, and the passage 73a is connected to a passage 82. The passage 82 is equipped with a pressure adjusting valve 16a. Furthermore, the passage 82 is connected to the first buffer tank 50 that stores fluorine gas generated.

In the following, the second refining section 22 will be described.

Like the first refining section, the second refining section comprises two systems arranged in parallel, which are a refining device 22a and another refining device 22b and are switchable to cause only one of them to open for flowing of fluorine gas therethrough.

To a downstream part of the refining device 21a of the first refining section 21a, there is connected the outlet passage 52a for discharging fluorine gas from the refining device 21a, and the outlet passage 52a has two branches at its downstream part, one of the branches being denoted by 53. It is preferable to provide the branch 53 with a valve 14 that selectively blocks and allows the flow of fluorine gas therethrough as need arises. That is, it is preferable to provide a structure in which by selectively opening/closing the valve 14, the fluorine gas having passed through the refining device 21a is led into either one of the refining devices 22a and 22b of the second refining section 22a.

To downstream parts of the refining devices 22a and 22b of the second refining section 22a, there are respectively connected an outlet passage 53a and the other outlet passage 53b, and the two outlet passages 53a and 53b are joined to connect to the first pump 17.

Although, in the above, description is mainly directed to the refining device 21a, the other refining devices, viz., the devices 21b, 22a and 22b, are each provided with a system that treats the fluorine gas generated at the positive pole, a system that discharges or recovers hydrogen fluoride adsorbed in the refining device, a system that discharges fluorine in the refining device, a system that controls the pressure in the refining device in a standby condition, and a detecting system that detects concentration of hydrogen fluoride in the fluorine gas that has passed through a cylindrical member of the refining device.

In the above, explanation is directed to a construction of the first refining device 21 and second refining device 22 which are provided in the refining line 20. However, the construction in which the cylindrical member of each refining device is filled with adsorbing material is not limited particularly. That is, various types of construction are applicable to the refining device.

That is, one example is that a cylindrical member filled with adsorbing material is vertically arranged to cause the gas to flow in the cylindrical member in a vertical direction and the other example is that a cylindrical member filled with adsorbing material is horizontally arranged to cause the gas to flow in the cylindrical member in a horizontal direction.

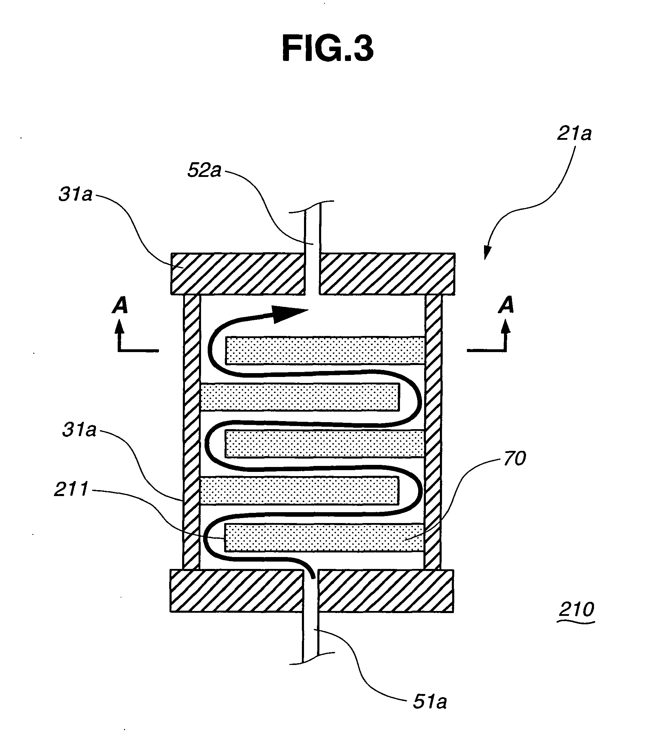

Regarding the direction in which the gas flows in the refining devices, Figs. 1 and 2 show an example in which the gas flows in each refining device in a direction from an upper part to a lower part of the cylindrical member and Fig. 3 shows, for explanation, another example in which the gas flows in each refining device in a direction from a lower part to an upper part of the cylindrical member. However, the direction of the gas flow in each refining device is not limited. That is, for example, the gas may be forced to flow from a lower part to an upper part or from an upper part to a lower part of the cylindrical member.

As is described hereinabove, in the invention, a way in which the adsorbing material for adsorbing hydrogen fluoride is directly put in the cylindrical members of the refining devices may be employed. However in the way in which the adsorbing material is directly put in the cylindrical members, it tends to occur that mist of the molten salt from the electrolytic tank and hydrogen fluoride evaporated from the molten salt are adsorbed by the adsorbing material in the vicinity of the gas inlet of each refining device, and thus the adsorbing material is subjected to a clogging due to expansion and fusion of the adsorbing material, which brings about closing of each cylindrical member.

In order to avoid such undesired phenomenon, an adsorbing material holding member may be installed in the cylindrical member of the refining device in a manner to define a space for securing a gas flow passage.

The adsorbing material holding member now mentioned is a member that is to be installed in the cylindrical member of each refining device in a manner to hold a given mount of adsorbing material in the space of the cylindrical member. A plurality of adsorbing material holding members, which are spaced from one another by a given distance, may be used. The adsorbing material holding member is arranged in the cylindrical member in such a manner as to define therein a space that assures a gas flow passage and define the gas flow passage in the space that has no adsorbing material received therein, so that clogging of each refining device is suppressed.

In order to increase the ratio of surface of area of the adsorbing material to which the gas flowing in the cylindrical member contacts, it is preferable that the adsorbing material holding member is formed with a through bore. The through bore now mentioned is not limited in type so long as it can hold the adsorbing material and has a size to permit flow of gas therethrough, and the through bore can be suitably designed. Considering the ratio of outer surface of the adsorbing material to which gas contacts, it is preferable that the adsorbing material holding member has a porous or meshed construction.

The adsorbing material holding member is not limited in shaped so long as it assures a gas flow passage formed in the cylindrical member and is able to hold the adsorbing material. Examples of the adsorbing material holding member may be of a type in which a global or cylindrical cage constructed of mesh is filled with the adsorbing material, a type in which tray-shaped containers (which will be referred to tray-like members) are filled with the adsorbing material, and a type in which metal sheets (and mesh metal sheets) are arranged to put therebetween the adsorbing material.

The way for arranging the adsorbing material holding member in the cylindrical member of the refining device is not limited so long as it can provide in the cylindrical member a clearance for assuring a gas flow passage. Examples of the way may be of a type in which the adsorbing material holding member having the above-mentioned construction is hung within the space in the cylindrical member and a type in which the adsorbing material holding member is fixed to a side surface of the cylindrical member.

As is described hereinabove, by employing the adsorbing material holding member that is so arranged as to provide the interior of the cylindrical member with the clearance for assuring the gas flow passage, the interior of the cylindrical member can constantly assure the gas flow passage even if the adsorbing material is subjected to a clogging, so that undesired blockage is suppressed and refining of the gas is effectively carried out.

Considering practical handling easiness, such as the machinability needed when a through bore is machined in the adsorbing material holding member, the easiness with which the cylindrical member is mounted to a desired position and the easiness with which the adsorbing material containing means is filled with the adsorbing material, each of the adsorbing material holding members has preferably a tray-like shape.

Each of the tray-like members now mentioned now is a flat vessel that contains therein some things, and it is not limited to a circular, rectangular or the like member so long as it is able to contain therein the adsorbing material. That is, the shape of each tray-like member is suitably selected depending on its designing.

In the following, as a preferable example of the adsorbing material holding member, tray-like members will be described as a part of a refining device (which will be referred to as a refining device concerning the second embodiment) employed in the second embodiment. Although, in the following, each tray-like member will be described as the adsorbing material holding member, the adsorbing material holding member employed in the invention is not limited to the tray-like member.

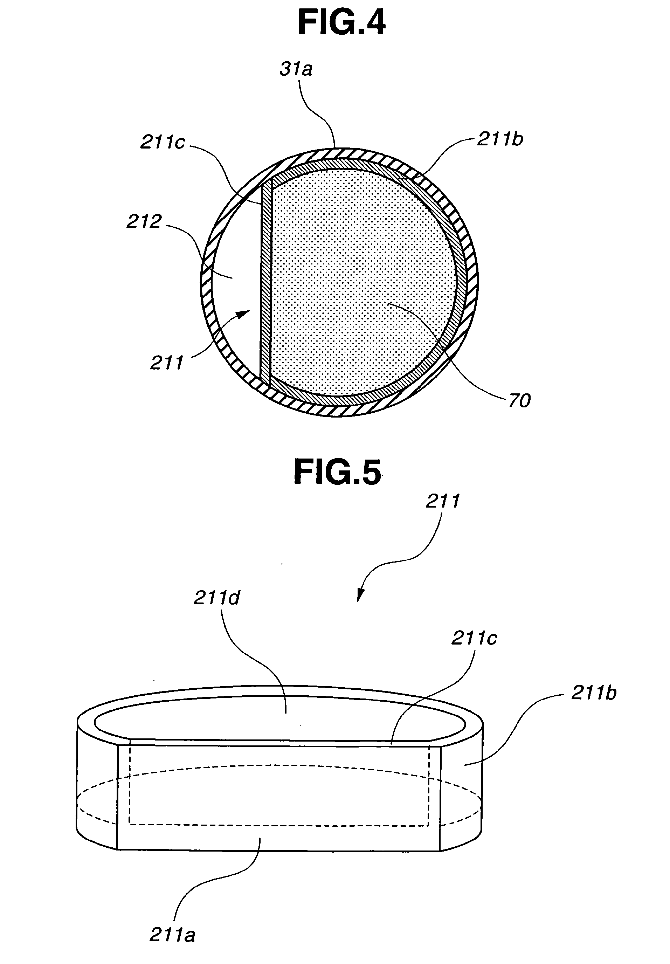

In the following, a refining device 210 equipped with the tray-like members employed in the second embodiment of the present invention will be described with reference to Figs. 3, 4 and 5. Fig. 4 is a sectional view taken along the line A-A of Fig. 3. Fig. 5 is a view showing part of one tray-like member employed as absorbing material holding member.

First, outline of the refining device 210 equipped with tray-like members will be described with respect an arrangement wherein the tray-like members are applied to the refining device 21a of the first refining section.

As is shown in Figs. 3 and 4, the tray-like members 211 are mounted to an internal side surface of a cylindrical member 31a installed in the refining device 21a of the first refining section. More specifically, for increasing the amount of the adsorbing material that is to be received, the tray-like members 211 are set in the cylindrical member 31a while contacting to the internal side surface of the cylindrical member 31a. The adsorbing material 70 has a shape that can be contained in the tray-like member 211.

By providing cut portions 212 at end portions of the tray-like members 211, the cylindrical member 31a is able to have therein a clearance by which the gas is permitted to make a flow in the cut portions 212 and thus complete closing of the flow is suppressed, which is a feature. Each cut portion now mentioned is not limited in shape and design so long as it assures the gas flow in the clearance of the cylindrical member 31a.

The position where the cut portion of each tray-like member is provided is not limited so long as it assures the gas flow. However, as is seen from Fig. 3, for facilitating contact between the gas and the adsorbing material, it is preferable that the tray-like members 211 are set at side surface of the cylindrical member in such a manner that the cut portions appear alternately at right and left portions with respect to a direction in which the gas flow from a gas inlet part to a gas outlet part.

For completely suppressing the closing of the refining device and increasing the adsorbing ability of the hydrogen fluoride, it is preferable to increase the number of the tray-like members 211 (see Example 1-1 mentioned hereinafter). However, in practicality, the number of the tray-like members should be determined based on the amount of hydrogen fluoride to be adsorbed and the size of the refining device used therein.

The size and arrangement of the tray-like members are not limited so long as they don't disturb the flow of gas. Preferably, the size and arrangement of the tray-like members are determined depending on the size of the cylindrical member to which the tray-like members are mounted.

In the following, one example of the construction of the tray-like member employed in the invention will be described with reference to Fig. 5.

The tray-like member 211 employed in the invention comprises a bottom wall portion 211a, a side wall portion 211b, a cut side portion 211c and an upper open portion 211d, and as is seen from Fig. 5, an end portion of the tray-like member 211 constitutes the cut portion 212. By providing the cut portion 212, gas is permitted to flow and complete closing is not made, which is a characteristic feature.

If desired, for increasing the outer surface of the adsorbing material to which gas contacts thereby to increasing the adsorbing efficiency, members that constitute the tray-like members 211 may be provided with through bores.

All members of the tray-like members 211 may be provided with the through bores. In order to increase the outer surface of the adsorbing material to which the gas contacts, it is particularly preferable to provide the bottom wall portion 211a with the through bore. The method of forming the tray-like member 211 with the through bore is not limited. One example of it is a so-called punching process.

In order to much more increase the outer surface of the adsorbing material to which the gas contacts, it is particularly preferable that the bottom wall portion 211a of a given tray-like member 211 is constructed of a mesh (see Example 1-1). Of course, the entire construction of the tray-like member 211 may be constructed of a mesh.

Even when, with the bottom wall portion 211a made of mesh, the mesh is subjected to a clogging, complete closing can be suppressed because the gas flow is assured due to provision of the cut portions.

As a material of the tray-like member 211, it is preferable to select a material that exhibits durability against fluorine gas and hydrogen fluoride gas. Examples of the material are stainless steel, Monel metal, alloys of nickel and nickel metal. In case of the bottom wall portion 211a made of mesh, the material of the mesh is preferably the same as the above-mentioned material.

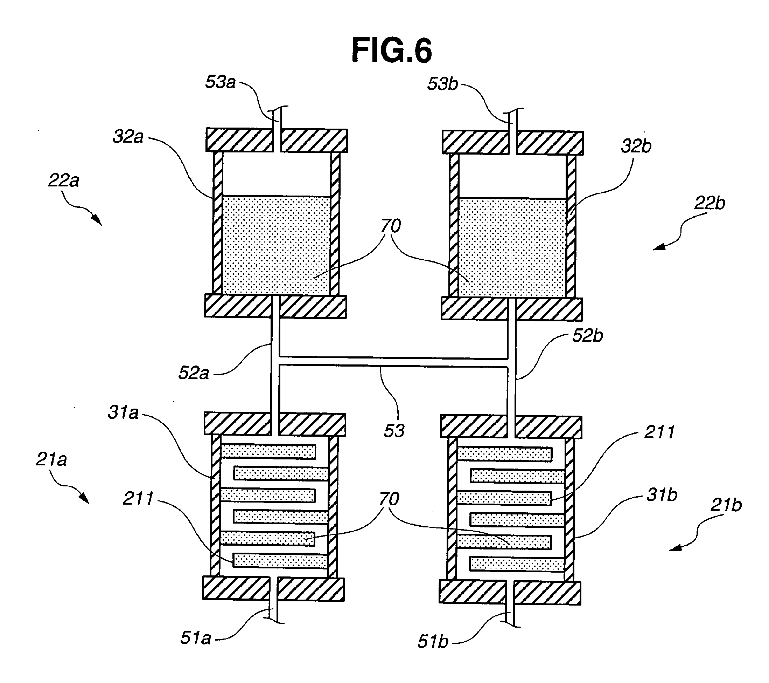

In the above, the refining device employed in the second embodiment that employs the adsorbing material holding member is described. The refining device provided with the adsorbing material holding member is applicable to all of the refining devices of the invention. In particular, as is seen from Fig. 6, it is preferable to apply the refining device to the refining device of the first refining section. The reason is that the first refining section is a roughly removing section that removes the most part of hydrogen fluoride in fluorine gas and thus the first refining section has a possibility of being subjected to a clogging due to a high load applied to the adsorbing material.

Fig. 6 is a schematic view of the refining line showing only major portions and references with detailed portions omitted.

In the following, operation of the refining line 20 having the above-mentioned construction will be described.

In the following, description will be directed to a condition wherein the refining device 21a is in operation, the refining device 21b is in standby condition, the refining device 21c is in operation and the refining device 21d is in standby condition.

In the refining device 21a, the inlet valve 11a and outlet valve 12a are in their open condition, and thus, fluorine gas is continuously led into the cylindrical member 31a from the electrolytic tank 1. While, in the refining device 21b, the inlet valve 11b and the outlet valve 12b are in their close condition. Accordingly, in such condition, fluorine gas generated in the electrolytic tank 1 is supplied to only the refining device 21a.

Fluorine gas refined by the refining device 21a is directed to the outlet passage 52a of the refining device 51a and led to the refining device 22a. Like the valves of the refining device 21a, an inlet valve 13a and an outlet valve 15a of the refining device 22a are in their open condition, and thus, the interior of the cylindrical member 32a is continuously fed with the fluorine gas from the electrolytic tank 1 through the refining device 21a. While, an inlet valve 13b and an outlet valve 15b of the refining device 22b are in their closed condition. Furthermore, the passage 53 branched from a downstream part of the outlet passage 52a of the refining device 21a is closed, that is, the valve 14 is closed.

In the following, the refining device 21a of the first refining section 21 and the refining device 22a of the second refining section 22, which are both in their operation condition, will be described.

The refining device 21a is provided with the cylindrical member 31a through which fluorine gas flows and around the cylindrical member 31a with a heater 41a, so that the temperature in the cylindrical member 31a is controlled. In a range of room temperature, sodium fluoride exhibits a high adsorbing ability to hydrogen fluoride, which tends to deteriorate the sodium fluoride. In view of this, it is preferable that the temperature of the cylindrical member 31a of the refining device 21a of the first refining section is so set as to adsorb almost all of the hydrogen fluoride while applying less load to the adsorbing material. That is, the first refining section 21 is constructed to exhibit a roughly removing process for removing almost all of hydrogen fluoride in the fluorine gas.

Considering the needed concentration of hydrogen fluoride in the fluorine gas and the load of the adsorbing material, it is preferable to set the temperature in the cylindrical member 31a within a range from 70°C to 120°C. In order to lower deterioration of the sodium fluoride contained in the cylindrical member 31a and cause the concentration of hydrogen fluoride in the fluorine gas led from the electrolytic tank 1 to show a value smaller than 1000ppm, it is especially preferable that the temperature in the cylindrical member 31a is set to a range from 70°C to 100°C.

Like the refining device 21a, the refining device 22a is provided with the cylindrical member 32a through which fluorine gas flows and around the cylindrical member 32a with a heater 42a, so that the temperature in the cylindrical member 32a is controlled. The fluorine gas flowing into the refining device 22a has already removed almost all of hydrogen fluoride therefrom during flowing through the refining device 21a. Thus, in the refining device 22a, it is preferable to adsorb hydrogen fluoride that has not been adsorbed by the refining device 21a, by setting the temperature of the cylindrical member 32b to a temperature about a room temperature to increase the adsorbing ability of sodium fluoride.

In order to cause the concentration of hydrogen fluoride in the fluorine gas led through the refining device 21a to show a value smaller than 100ppm, it is preferable to set the temperature in the cylindrical member 32a to a range from 0°C to 50°C. In this case, almost all of the hydrogen fluoride has been removed by the refining device 21a, and thus, the load applied to the adsorbing material is very small.

As is mentioned hereinabove, by setting the temperature in the refining device of the first refining section to which fluorine gas is led higher than the temperature in the refining device of the second refining section to which the fluorine gas is led, it becomes possible that in the first refining section, almost all of hydrogen fluoride is removed without applying a big load to the adsorbing material in the refining device of the first refining section, and in the second refining section, the hydrogen fluoride that has not been adsorbed by the first refining section is removed. It is preferable that the temperature condition is suitably determined in accordance with a needed degree of purity of fluorine gas (viz., concentration of hydrogen fluoride).

That is, by controlling the amount of adsorbed hydrogen fluoride in each refining device, hydrogen fluoride in the fluorine gas can be removed or recovered without deteriorating the adsorbing material contained in each refining device.

In case wherein due to increase of amount of hydrogen fluoride adsorbed in the cylindrical member 31a of the refining device 21a, the hydrogen fluoride concentration detector 61a connected to the outlet passage 52a detects that the hydrogen fluoride concentration has arrived at a predetermined value, the refining device 21a is stopped and the refining device 21b is started thereby effecting operation switching between the devices 21a and 21b. After stopping, reuse process is carried out in the refining device 21a.

In case wherein a hydrogen fluoride concentration detector (not shown) connected to the outlet passage 53a detects that the hydrogen fluoride concentration has arrived at a predetermined value, switching from the refining device 22a to the refining device 22b is possible.

In the first and second refining sections 21 and 22, operation switching between the refining devices is same and reuse process in the refining devices is same. Thus, in the following, only operation switching from the refining device 21a to the refining device 21b and only reuse process in the refining device 21a will be described.

First, operation switching of the refining devices will be described.

When the amount of hydrogen fluoride adsorbed in the cylindrical member 31a of the refining device 21a is increased, the hydrogen fluoride concentration detected by the hydrogen fluoride concentration detector 61 connected to the outlet passage 52a shows a higher level. When the detected hydrogen fluoride concentration arrives at a predetermined level, operation switching from the refining device 21a to the other refining device 21b is carried out.

More specifically, after the inlet valve 11b and outlet valve 12b of the refining device 21b and the valve 14 are opened, the inlet valve 11a and outlet valve 12a of the refining device 21a are closed. With this, the refining device 21b starts to operate and the refining device 21a stops, so that the fluorine gas is led from the electrolytic tank 1 to the refining device 21b.

If desired, operation switching from the refining device 21a to the refining device 21b may be carried out based on a hydrogen fluoride concentration detected by the hydrogen fluoride concentration detector 62 installed in the first buffer tank 50.

In the following, reuse process of the refining device will be described.

In the stopped refining device 21a, fluorine gas is discharged from a fluorine gas discharging passage 701a provided by the cylindrical member 31a. More specifically, by fully opening the discharge valve 10a provided to the passage 701a and effecting a sucking operation by the discharge pump 90a, fluorine gas is discharged.

After fluorine gas is discharged from the cylindrical member 31a of the refining device 21a, the heater 41a put around the cylindrical member 31a is set to have a temperature range from 150°C to 300°C. With this, hydrogen fluoride adsorbed by sodium fluoride is released from the same. At the same time, a discharge valve 17a connected to the outlet passage 71a is fully opened, so that the released hydrogen fluoride is sucked by the second pump 18 and led to the hydrogen fluoride supply source 60. After the discharge of hydrogen fluoride from the cylindrical member 31a is finished, the discharge valve 17a connected to the outlet passage 71a is fully closed. Upon this, the discharge of hydrogen fluoride from the cylindrical member 31a is completed.

Once the discharge of hydrogen fluoride from the cylindrical member 31a is completed, the heater 41a put around the cylindrical member 31a is set to have a temperature range from 70°C to 100°C. Furthermore, by the pressure adjusting valve 16a provided in the passage for adjusting an internal pressure of the refining device 21a, the pressure in the cylindrical member 31a is controlled to a level that is substantially equal to that in the electrolytic tank 1. Due to feeding of fluorine gas to the cylindrical member 31a from the first buffer tank 50 that stores fluorine gas, the internal pressure of the cylindrical member 31a is increased, and when the internal pressure is increased to a level generally equal to that of the electrolytic tank 1, feeding of fluorine gas is stopped. With the above, the reuse process by the refining device 21a is finished and the refining device 21a takes a standby state.

As is mentioned hereinabove, the refining device 21a at the standstill condition assumes a standby condition wherein the temperature in the cylindrical member 31a is set within the given range (70°C to 100°C), fluorine gas is received in the cylindrical member 31a and the interior pressure of the cylindrical member is substantially equal to that of the electrolytic tank. Accordingly, when the amount of hydrogen fluoride accumulated in the cylindrical member 31a of the operating refining device 21b arrives at a predetermined level, it is possible to stop the operation of the refining device 21b and start the operation of the refining device 21a establishing operation switching between the two refining devices.

If desired, the refining line 20 may be so arranged that based on concentration of hydrogen fluoride in a downstream part of each refining device or the first buffer tank 50 detected by a concentration detector, the valves and pumps are controlled by a controller.

From the above-mentioned arrangement, the following advantageous effects are obtained.

The refining line 20 comprises the first refining section 21 that roughly removes hydrogen fluoride from the fluorine gas and the second refining section 22 that removes the hydrogen fluoride that has not been removed by the first refining section 21. By controlling the refining devices of the first and second refining sections 21 and 22, the amount of adsorbed hydrogen fluoride can be controlled and at the same time deterioration of the adsorbing material used in the refining devices can be lowered. Accordingly, the maintenance of recovering and changing the adsorbing material is facilitated.

In each of the refining devices of the refining line 20, by supplying the adsorbed hydrogen fluoride to a material source of the electrolytic tank to reuse the hydrogen fluoride, fluorine gas can be effectively generated.

Since an adsorbing process and a removing process (reuse process) of the refining line 20 that employs the refining devices (refining devices used in a second embodiment) each using the adsorbing material holding member are substantially the same as those mentioned hereinabove, explanation of them will be omitted.

The present invention is not limited to the above-mentioned embodiments and it is obvious that various modifications of the embodiments may be carried out in light of a conceptual range in technology of the invention.

For example, the number of the refining devices of the refining line 20 may be three or more.

### Industrial Usage:

The present invention is practically applicable to a device that produces fluorine gas.

### Examples of ability test:

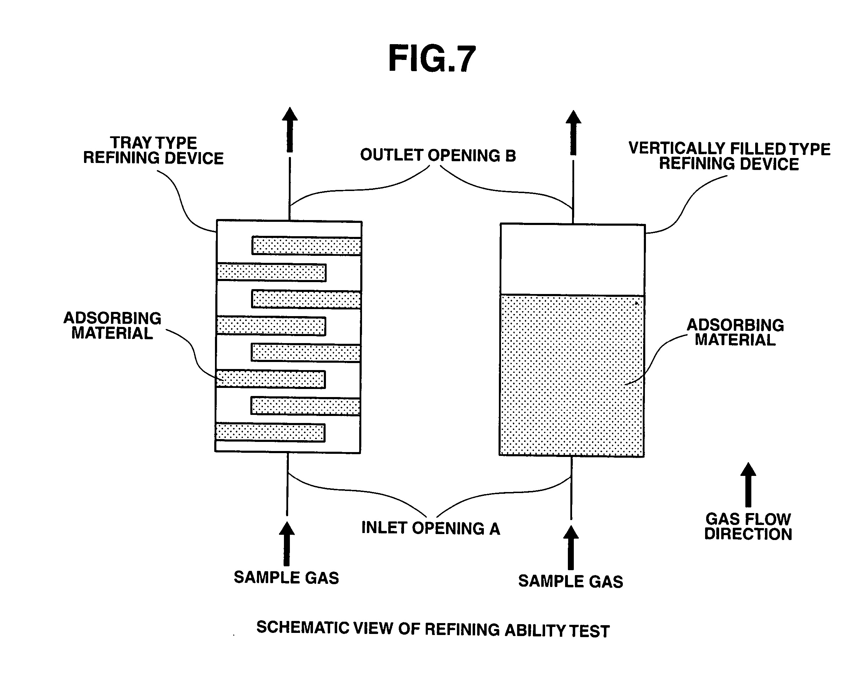

By using a device schematically shown in Fig. 7, a refining device applicable to the second embodiment of the invention was subjected to a refining ability test. For carrying out the refining ability test, a pressure difference between a gas inlet opening A and a gas outlet opening B of a repeatedly used refining device and a concentration of hydrogen fluoride in a gas in the gas outlet opening were measured. In the following, a refining device using therein a tray type vessel as one example of tray-like member serving as an adsorbing material holding member will be referred to as a tray type refining device, and the tray type refining device will be explained.

Specifically, adsorbing process for adsorbing hydrogen fluoride to an adsorbing material and removing process for removing the hydrogen fluoride are repeatedly carried out, and each time of repeat, a pressure difference between the gas inlet opening A and the gas outlet opening B of the refining device and a concentration of the hydrogen fluoride in the gas outlet opening B were measured. The results of the measurement is shown in Table 1. Test results of a measurement applied, under the same test condition, to a vertically filled type refining device are also shown in the Table for reference. The vertically filled type refining device now mentioned is a device that includes vertically arranged cylindrical members that are filled with adsorbing material.

### [Embodiment 1-1]

As a tray-like member, a tray type vessel was used. The tray type vessel used was provided at one end portion with a cut portion and a bottom wall of the vessel was mortised, and a mesh metal sheet was inserted into the mortised part. The material of the tray type vessel was stainless steel.

As is shown by Fig. 7, for achieving a zigzag gas flow, eight cut portions were provided alternately at right and left portions of the cylindrical member of the refining device. Sodium fluoride as adsorbing material was contained in each tray type vessel by 80g (total is 640g with 8 steps), and by the function of a heater mounted around the cylindrical member, the temperature of the interior of the cylindrical member was controlled to 100°C.

Hydrogen fluoride gas diluted to 9% by nitrogen gas was used as a sample gas and forced to flow through the tray type refining device at a speed of 0.7cm/sec for 15 hours. During this gas flow, the pressure difference between the gas inlet opening A and the gas outlet opening B was measure with the aid of a pressure gage and after the 15 hours gas flowing, the concentration of hydrogen fluoride in the gas outlet opening B was measured by Fourier transform infrared spectrometer (FT-IR).

Then, by operating the heater mounted on the cylindrical member, the temperature in the cylindrical member was controlled to 250°C, then, nitrogen gas was forced to flow in the passage at a speed of 2.1cm/sec for removing the hydrogen fluoride adsorbed to the adsorbing material (sodium fluoride).

In addition to the above, the same adsorbing process for adsorbing hydrogen fluoride to the adsorbing material and the same removing process for removing the adsorbed hydrogen fluoride were repeated by fifteen times. During this, the pressure difference and the concentration of the hydrogen fluoride were measured at each repeat. As is shown in Table 1, even after the fifteen times repeat, the tray type refining device did not show a remarkable pressure difference between the gas inlet opening A and the gas outlet opening B of the refining device. The concentration of hydrogen fluoride at each time of fifteen repeats was not higher than 1000ppm.

From the above-mentioned results, it is apparent that by using the tray type refining device, hydrogen fluoride is effectively adsorbed by the refining device without clogging the adsorbing material.

### [Reference 1-1]

As a refining device, a vertically filled type refining device was used, which is substantially the same as the device of the above-mentioned embodiment 1-1 except that in the reference 1-1, there is no means corresponding to the adsorbing material holding member in the cylindrical member. Sodium fluoride of an amount of 640g, as the adsorbing material, was simply received in the vertically filled type refining device. The vertically filled type refining device was subjected to a refining ability test under the same test condition as that of the above-mentioned embodiment 1-1.

The result was as follows. In the vertically filled type refining device, the concentration of hydrogen fluoride in the gas outlet opening B was not higher than 1000ppm at each time of fifteen repeats. However, at the time of sixth repeat, the pressure difference was 10000Pa and higher thereby proving that the adsorbing material was completely clogged up.

From the ability tests on [Embodiment 1-1] and [Reference 1-1], it is apparent that the tray type refining device has a refining ability equal to that of the vertically filled type refining device and the tray type refining device is not easily clogged.

**Table 1**

| Produced pressure difference [Pa] | | | | | | | |
|---|---|---|---|---|---|---|---|
| (after 15 hours gas flowing) | | | | | | | |
| Number of repeated times | 1 | 2 | 3 | 4 | 5 | 10 | 15 |
| Reference 1-1 (vertically filled type) | 133 | 399 | 665 | 2660 | 4389 | - | - |
| Embodiment 1-1 (tray type) | 2 | 5 | 3 | 4 | 0 | 5 | 4 |

### Explanation of References:

100 fluorine gas generating device
1 electrolytic tank
2 fluorine gas supplying system
3 by-product gas supplying system
4 external device
5 material supply system
103a positive pole
103b negative pole
101a anode chamber
101b cathode chamber
15 first main passage
16 second main passage
17 first pump
18 second pump
20 refining line
21 first refining section
22 second refining section
210 refining device employed in the second embodiment
211 tray-like member
21a, 21b,22a,22b refining device
31a, 31b, 32a, 32b cylindrical member
41a, 41b,42a,42b heater
50 first buffer tank
60 hydrogen fluoride supply source
61a, 61b,62a,62b,62 hydrogen fluoride concentration detector
70 adsorbing material
90a, 90b, 91a, 91b discharge pump

## Claims

1. A fluorine gas generating device for generating fluorine gas by subjecting hydrogen fluoride in a molten salt with hydrogen fluoride to electrolysis, comprising:
an electrolytic tank that, by subjecting hydrogen fluoride in a bath of electrolytic solution including a molten salt containing hydrogen fluoride, produces at an anode side a main-product gas that contains as a main component a fluorine gas and at a cathode side a by-product gas that contains as a main component a hydrogen gas; and
a refining line including refining devices that, with the aid of an adsorbing material, remove hydrogen fluoride gas that has been evaporated from the molten salt of the electrolytic tank and mixed to the fluorine gas generated at the anode side,
the refining line comprising:
a first refining section including at least two refining devices that are arranged in parallel;
a second refining section including at least two refining devices that are arranged in parallel, the second refining section being positioned downstream of the first refining section; and
a piping through which fluorine gas that has passed through either one of the refining devices of the first refining section is led to either one of the refining devices of the second refining section.

2. A fluorine gas generating device as claimed in Claim 1, in which each of the refining devices comprises:
adsorbing material storing means that contains therein an adsorbing material that is able to adsorb the hydrogen fluoride in the fluorine gas generated in the electrolytic tank, the adsorbing ability of the adsorbing material varies with change of temperature;
a temperature control device that controls the temperature in the adsorbing material storing means;
a concentration detector that detects the concentration of hydrogen fluoride in the fluorine gas that is passing through the adsorbing material storing means; and
a piping through which based on results of detection by the concentration detector, operation switching is so made that the fluorine gas is led to the refining device in a standby condition in the first or second refining section, the hydrogen fluoride is discharged from the adsorbing material storing means of the refining device that has stopped in operation due to the operating switching, and the temperature in the refining device is controlled by the temperature control device thereby to cause the stopped refining device to take a standby condition.

3. A fluorine gas generating device as claimed in Claim 1 or 2, in which in the first and second refining sections, the temperature in the adsorbing material storing means to which the fluorine gas is led is set to a range from 0°C to 120°C, and the temperature in the adsorbing material storing means of the first refining section is set higher than the temperature in the adsorbing material storing means of the second refining section.

4. A fluorine gas generating device as claimed in Claim 1, 2 or 3, in which the adsorbing material storing means is equipped with an adsorbing material holding member that is arranged to define a space for securing a gas flow passage in the adsorbing material storing means.

5. A fluorine gas generating device as claimed in Claim 1, 2, 3 or 4, in which the adsorbing material holding member is formed with a through bore.

6. A fluorine gas generating device as claimed in Claim 1, 2, 3, 4 or 5, in which the adsorbing material holding member is a tray-like member.

7. A fluorine gas generating device as claimed in Claim 4, 5 or 6, in which the adsorbing material holding member is so arranged and shaped to define in the adsorbing material storing means a zigzag passage for the gas flow.

8. A fluorine gas generating device as claimed in Claim 1, 2, 3, 4, 5, 6 or 7, in which to the refining devices of the first and second refining sections, there is connected a discharge passage through which the adsorbed hydrogen fluoride is discharged and the discharged hydrogen fluoride is led into the electrolytic tank for reusing the hydrogen fluoride.

9. A fluorine gas generating device as claimed in Claim 1, 2, 3, 4, 5, 6, 7 or 8, in which the adsorbing material is sodium fluoride.
